# EUROPÄISCHE PATENTSCHRIFT

(11) **EP 0 982 609 B1**
(45) Veröffentlichungstag und Bekanntmachung des Hinweises auf die Patenterteilung: **14.06.2006**
(21) Anmeldenummer: 98810823.9
(22) Anmeldetag: 21.08.1998
(51) Int. Cl.: G02B 6/38

(54) **Buchsenteil für eine Steckverbindung für Lichtwellenleiter und Steckverbindung**
Sleeve for lightguide connection and connection
Douille pour connection d'un guide d'onde optique et connection

(43) Veröffentlichungstag der Anmeldung: 01.03.2000
(73) Patentinhaber: Diamond SA, 6616 Losone (CH)
(72) Erfinder: De Marchi, Silverio, 6612 Ascona (CH)
(74) Vertreter: Wenger, René

(56) Entgegenhaltungen:
- EP-A- 0 616 236
- DE-U- 9 103 894

## Beschreibung

Die Erfindung betrifft ein Buchsenteil für eine Steckverbindung für Lichtwellenleiter und eine solche Steckverbindung mit den Merkmalen des Oberbegriffs der unabhängigen Patentansprüche.

Solche Buchsenteile sind in einer Vielzahl von verschiedenen Ausführungsformen zum Verbinden von Lichtwellenleitern bekannt, welche mit einem Steckerteil versehen sind.

Es ist bekannt, solche Buchsenteile und Steckerteile mit Kodierungen zu versehen, damit gewährleistet ist, dass nur ein genau definierter Steckerteil in ein bestimmtes Buchsenteil eingesteckt werden kann.

Aus dem europäischen Patent EP 616 236 ist es beispielsweise bekannt, an einem Steckerteil einen Schlüsselabschnitt mit einer aus Vorsprüngen und Aussparungen bestehenden Kodierung vorzusehen. Der Schlüsselabschnitt kann in einen Sicherungsabschnitt an dem Buchsenteil mit einer korrespondierenden Kodierung eingreifen. Der Schlüsselabschnitt und der Sicherungsabschnitt sind so angeordnet, dass eine Sperrklinke in dem Buchsenteil nur bei übereinstimmender Kodierung einrastbar ist. Damit kann verhindert werden, dass einem Gerät irrtümmlich falsche Steckerteile eingesteckt werden.

Das Gebrauchsmuster DE 91 03 8944 offenbart ein Kupplungsgehäuse bei dem ein Kodierelement in das Gehäuse einschnappbar ist.

Da der Entriegelungshebel ein separates Bauteil sein kann lassen sich einfach Entriegelungshebel mit unterschiedlicher Kodierung herstellen, welche wahlweise auf Steckerteile montiert werden können. Auch der Sicherungsabschnitt am Buchsenteil ist austauschbar ausgebildet. Dabei ist der Sicherungsabschnitt auf einem Rahmen ausgebildet, der gleichzeitig mehrere einzelne Bestandteile des Buchsenteils zusammenhält.

Diese Art der Kodierung ist zwar zuverlässig, weist aber hinsichtlich der Herstellung und des Handlings gewisse Nachteile auf. Der Rahmen muss in einer Schwenkbewegung auf das Buchsenteil aufgeschnappt werden. Diese Kombination von Kippen und Einschnappen ist verhältnismässig kompliziert und erschwert den Herstellungsvorgang.

Es wird angestrebt, Kodierungselemente möglichst einfach auszutauschen. Die Buchsenteile sollen einheitlich im Spritzgussverfahren hergestellt werden können und anschliessend mit entsprechenden Kodierungen versehen werden. Bei Kodierungen gemäss dem Stand der Technik ist der Austausch nicht so einfach, weil das Buchsenteil gleichzeitig durch den Rahmen zusammengehalten wird. Bei einem Austausch des Kodierugselements besteht die Gefahr, dass die einzelnen Teile des Buchsenteils sich gegeneinander verschieben.

Der Rahmen mit der Kodierung gemäss Stand der Technik kann ausserdem nicht bei eingestecktem Steckerteil ausgetauscht werden. Bei gewissen Applikationen ist es aber vorteilhaft, wenn die Kodierung auch bei in das Buchsenteil eingestecktem Steckerteil geändert werden kann. Beispielsweise können so durch unterschiedliche Farben an der Kodierung bestimmte Steckverbindungen markiert werden. Auch ist es denkbar, dass im Betrieb das der Steckverbindung gegenüberliegende Ende des Lichtwellenleiters an ein anderes Peripheriegerät angeschlossen werden kann, so dass sich der Typ der Kodierung ändert. Dabei ist es nachteilig, wenn die Steckverbindung zuerst unterbrochen werden muss, damit eine neue Kodierung aufgesetzt werden kann.

Ein weiterer Nachteil der aus dem Stand der Technik bekannten Kodierung besteht im aufwendigen Zusammenbau und in dem verhältnismässig grossen Materialverbrauch für den Kodierungsrahmen.

Es ist deshalb eine Aufgabe der vorliegenden Erfindung, die Nachteile des Bekannten zu vermeiden, insbesondere also ein Buchsenteil bzw. eine Steckverbindung zu schaffen, welche einfach und wirtschaftlich herstellbar sind, welche einfach zusammengebaut werden können und welche ein Austausch der Kodierungselemente am Buchsenteil und am Steckerteil auch bei in das Buchsenteil eingestecktem Steckerteil erlauben.

Erfindungsgemäss werden diese Aufgaben mit einem Buchsenteil bzw. mit einer Steckverbindung mit den Merkmalen des kennzeichnenden Teils der unabhängigen Patentansprüche gelöst.

Das Buchsenteil für eine Steckverbindung für Lichtwellenleiter besteht im wesentlichen aus einem Gehäuse. Das Gehäuse weist wenigstens eine Öffnung zur Aufnahme eines Steckerteils auf. Wenn das Buchsenteil als Kopplungselement für zwei Steckerteile verwendet wird, weist das Gehäuse selbstverständlich zwei einander gegenüberliegende Öffnungen auf. Das Steckerteil ist entlang einer Einschiebachse wenigstens teilweise in das Buchsenteil einschiebbar. Das Buchsenteil weist üblicherweise wenigstens eine Buchse zur Aufnahme eines Steckerstifts am Steckerteil auf. Zum Sicherstellen, dass nur ein geeigneter Steckerteil in ein bestimmtes Buchsenteil eingesteckt werden kann, ist das Buchsenteil mit einem Sicherungsabschnitt versehen. Der Sicherungsabschnitt weist eine aus Vorsprüngen und/oder Aussparungen bestehende Kodierung auf. Ein Schlüsselabschnitt eines Steckerteils mit einer entsprechenden Kodierung ist mit der Kodierung in Eingriff bringbar. Wenn ein Schlüsselteil mit einer falschen Kodierung eingesteckt werden sollte, stimmen die Kodierungen nicht miteinander überein und ein Einschieben des Steckerteils in das Buchsenteil beziehungsweise ein Einrasten wird verunmöglicht.

Gemäss den Merkmalen der Erfindung ist der Sicherungsabschnitt des Buchsenteils auf wenigstens einem, separat ausgebildeten Kodierungselement angeordnet. Das Kodierungselement ist in einer Aufschnapprichtung auf das Buchsenteil aufschnappbar, die quer zur Einschiebeachse verläuft. Dies heisst, dass das Kodierungselement von einer Seite her (beispielsweise von oben) auf das Buchsenteil aufgeschnappt werden kann und nicht wie bisher aus einem Rahmen besteht, der mit einer Schnapp-Drehbewegung auf das Buchsenteil aufgebracht werden kann. Unter quer werden Aufschnapprichtungen verstanden, die nicht parallel zur Einschiebeachse verlaufen. Es ist auch eine kombinierte Schwenk-Schnappbewegung denkbar.

Weil die Aufschnapprichtung etwa senkrecht zur Einschiebeachse verläuft, ist das Kodierungselement auch bei eingestecktem Steckerteil aufschnappbar.

Wenn bei eingestecktem Steckerteil das Kodierungselement ausgetauscht werden soll, kann dieses einfach weggeschnappt werden. Damit wird das unter dem Kodierungselement des Buchsenteils liegende Kodierungselement am Steckerteil freigelegt. Auf diese Weise kann auch der Schlüsselabschnitt am Steckerteil ausgetauscht werden.

Das Buchsenteil ist vorteilhaft mit wenigstens einer Schutzklappe zum Verschliessen der Öffnung versehen. Solche Schutzklappen sind an sich bekannt und werden zum Vermeiden von Verschmutzung des Buchsenteils eingesetzt. Die Schutzklappe ist schwenkbar auf einer Achse im Buchsenteil gelagert.

In einem ersten Ausführungsbeispiel der vorliegenden Erfindung ist das Kodierungselement etwa U-förmig ausgebildet. Das Kodierungselement ist mit den Schenkeln auf die Seitenwände des Buchsenteils aufschnappbar. Unter U-förmig wird hier ein Kodierungselement mit einem Querschnitt verstanden, der eine etwa flache Basis und zwei etwa senkrecht dazustehende Schenkel aufweist.

Vorteilhaft bildet das Kodierungselement gleichzeitig einen Teil der Aussenfläche des Buchsenteils. So können die Aussenflächen je eines der Schenkel etwa in der selben Ebene liegen wie eine der Aussenfläche der Seitenwände des Buchsenteils. Das Kodierungselement fügt sich in die Gesamtheit des Buchsenteils ein und unterscheidet sich von diesem höchstens durch eine unterschiedliche Farbe.

In einem zweiten Ausführungsbeispiel kann das Kodierungselement als im wesentlichen flaches Plättchen ausgebildet sein. Das Plättchen ist mittels wenigstens einem Schnappelement beispielsweise einem Vorsprung, der eine Aussparung mit einer Hinterschneidung aufweist, auf die Achse aufschnappbar, welche auch die Schutzklappe trägt. Weil die Klappe gleichzeitig die Schutzklappe und das Kodierungselement trägt, kann einerseits Material gespart werden und andererseits die Bauweise des Buchsenteils kompakter gewählt werden.

Grundsätzlich ist es denkbar, das Buchsenteil mit einer oder mehreren Buchsen zur Aufnahme von einem oder mehreren nebeneinanderliegenden Steckerteilen zu versehen. In einem bevorzugten Ausführungsbeispiel ist das Buchsenteil als sogenanntes Duplexteil ausgebildet, welches zwei Buchsen zur Aufnahme von zwei nebeneinanderliegenden Steckerstiften aufweist. Auf der Achse sind zwei nebeneinanderliegende Schutzklappen angeordnet. Der Vorsprung des Plättchens ist in einem mittigen Abschnitt am Plättchen angeordnet und zwischen die beiden Schutzklappen auf die Achse aufschnappbar.

Vorteilhaft weist das Kodierungselement einseitig eine im wesentlichen flache Oberfläche auf. Die flache Oberfläche liegt bei aufgeschnapptem Kodierungselement etwa in der selben Ebene wie die Oberseite des Buchsenteils. Dadurch ergibt sich eine besonders kompakte Bauweise.

Zum besseren Positionieren und Einsetzen des Kodierungselements kann dieses ausserdem mit Ausrichtelementen versehen sein, die ein genau definiertes Aufschnappen gewährleisten. Die Ausrichtelemente sind mit entsprechenden Elementen am Buchsenteil in Eingriff bringbar. Vorteilhaft dient gleichzeitig wenigstens ein Teil der Ausrichtelemente auch als Vorsprünge und/oder Vertiefungen für die Kodierung. Die Vorsprünge die auf der einen Seite des Kodierungselementes angeordnet sind dienen also der Führung des Kodierungselementes beim Aufschnappvorgang und wirken gleichzeitig als Vorsprünge für die Kodierung.

Das Buchsenteil kann besonders einfach im Spritzgussverfahren hergestellt sein. Mit Ausnahme der Kodierungselemente kann das Buchsenteil einstückig gespritzt werden. Auch das Kodierungselement kann im Spritzgussverfahren hergestellt werden. Das Buchsenteil lässt sich dadurch in wenigen Schritten zusammenbauen. Nach Herstellung des Buchsenteils können ein oder mehrere Kodierungselemente aufgeschnappt werden.

Die vorangehend beschriebenen verschiedenen Ausführungsformen von Buchsenteilen lassen sich besonders vorteilhaft in einer Steckverbindung für Lichtwellenleiter einsetzen, bei welcher ein Steckerteil mit einem Schlüsselabschnitt mit einer Kodierung aus Aussparungen und/oder Vorsprüngen in das Buchsenteil eingesetzt wird. Damit das Steckerteil im Buchsenteil einrastet, kann das Buchsenteil mit einer Sperrklinke versehen sein. Das Steckerteil weist ein Sperrelement auf und kann mit einem Entriegelungselement versehen sein. Eine solche Anordnung ist aus dem Stand der Technik bekannt. Vorteilhaft ist der Schlüsselabschnitt, welcher die Kodierung am Steckerteil definiert, am Entriegelungselement angeordnet. Ein derartiges Steckerteil ist in der EP 616 236 beschrieben.

Vorteilhaft ist dabei das Entriegelungselement auswechselbar im Steckerteil gehalten. Während aufgrund des Rahmens gemäss Stand der Technik weder der Schlüsselabschnitt am Steckerteil noch der Sicherungsabschnitt am Buchsenteil bei eingestecktem Steckerteil ausgewechselt werden kann, ist es bei der Steckverbindung gemäss der vorliegenden Erfindung möglich, zuerst das Kodierungselement des Buchsenteils abzuschnappen und dann das freigelegte Entriegelungselement aus dem Steckerteil zu lösen.

Dies ermöglicht ein Ersetzen von Kodierungselementen durch Kodierungselemente mit gleichem Code aber anderer Farbe oder auch durch Kodierungselemente mit einem anderen Code bei eingesetztem Steckerteil.

Die Erfindung ist im folgenden anhand der Zeichnungen und in Ausführungsbeispielen näher beschrieben. Es zeigen:
- Fig. 1: eine perspektivische Darstellung eines ersten Ausführungsbeispiels einer erfindungsgemässen Steckverbindung,
- Fig. 2: einen Querschnitt durch das Buchsenteil gemäss Fig. 1,
- Fig. 3: eine perspektivische Darstellung des Buchsenteils aus Fig. 1 mit abgeschnapptem Kodierungselement,
- Fig. 4a und 4b: detaillierte Ansichten des Kodierungselements aus Fig. 3,
- Fig. 5: eine perspektivische Darstellung eines Buchsenteils eines zweiten Ausführungsbeispiel mit abgeschnapptem Kodierungselement,
- Fig. 6: eine perspektivische Darstellung einer Steckverbindung mit einer Buchse gemäss Fig. 5,
- Fig. 7: einen Längsschnitt durch das Buchsenteil von Fig.5,
- Fig. 8a bis 8c: detaillierte Ansichten des Kodierungselements des Buchsenteils gemäss Fig. 5.

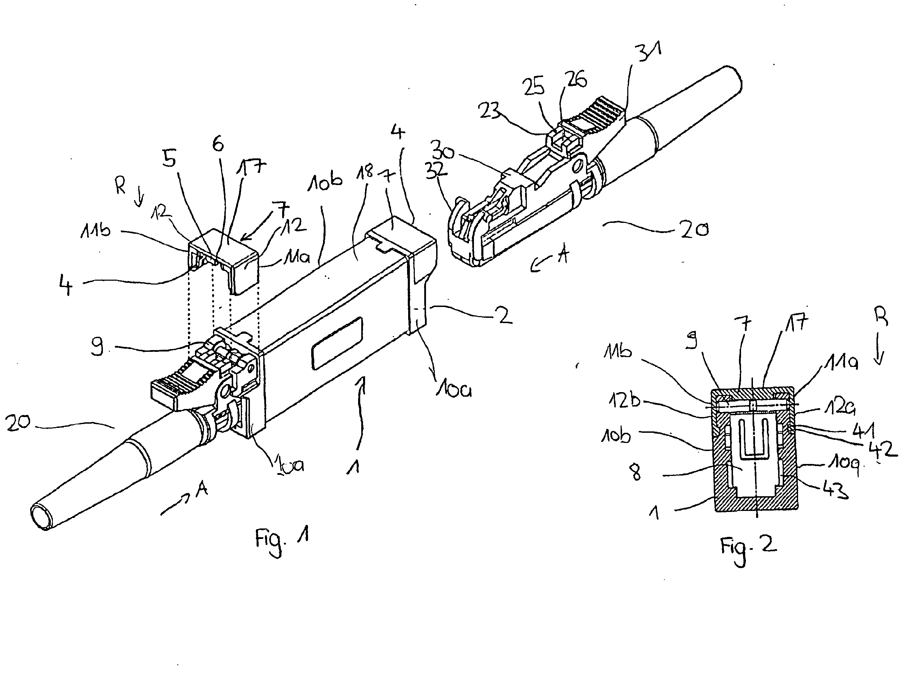

Fig. 1 zeigt eine Steckverbindung mit einem Buchsenteil 1 und zwei Steckerteilen 20. Die Steckerteile 20 sind auf je einer Seite des Buchsenteils 1 in eine Öffnung 2 am Buchsenteil entlang einer Einschiebeachse A einschiebbar. Die Steckerteile 20 sind im wesentlichen bekannt. Die Steckerteile 20 weisen einen Steckstift auf, der durch eine Klappe 32 verdeckt ist. Die Klappe 32 wird beim Einschieben des Steckerteils 20 geöffnet, so dass der Steckerstift freigegeben wird.

Der Steckerteil 20 ist mit einem Verriegelungsmechanismus versehen. Der Verriegelungsmechanismus besteht im wesentlichen aus einem Sperrelement 30, welches hinter eine Sperrklinke im Buchsenteil 1 einrastbar ist und aus einem Entriegelungselement 31, mittels welchem die Sperrklinke im Buchsenteil angehoben und ausser Eingriff mit dem Sperrelement 30 gebracht werden kann. Einstückig mit dem Entriegelungselement 31 ist ein Schlüsselabschnitt 23 ausgebildet, der den Typ des Steckerteils 20 kodiert. Der Schlüsselabschnitt 23 besteht aus einer in einer vorbestimmten Reihenfolge angeordneten Anzahl von Vorsprüngen 25 und Aussparungen 26.

Das Buchsenteil 1 ist im wesentlichen einstückig ausgebildet und weist etwa einen rechteckigen Querschnitt auf. Das Buchsenteil hat zwei Seitenwände 10a, 10b und eine Oberseite 18.

Ein Kodierungselement 7 ist in einer Aufschnapprichtung R etwa senkrecht zur Einschiebeachse A auf das Buchsenteil 1 aufschnappbar. Das Kodierungselement 7 trägt einen Sicherungsabschnitt 4, welcher den Typ des Buchsenteils 1 kodiert. Der Sicherungsabschnitt 4 besteht aus Vorsprüngen 5 und Aussparungen 6.

Das Kodierungselement 7 ist U-förmig ausgebildet und weist zwei Schenkel 11a, 11b auf. Die Aussenflächen 12 der Schenkel 11a, 11b liegen etwa in der gleichen Ebene wie die Seitenflächen 10a, 10b des Buchsenteils 1.

Das Kodierungselement 7 weist eine im wesentlichen glatte Oberfläche 17 auf, die etwa in der gleichen Ebene liegt wie die Oberfläche 18 des Buchsenteils 1.

Das Kodierungselement 7 ist auch bei eingestecktem Steckerteil 20 auf das Buchsenteil 1 aufschnappbar.

In Fig. 2 ist ein Querschnitt durch das Buchsenteil 1 mit aufgeschnapptem Kodierungselement 7 gezeigt. Das U-förmige Kodierungselement 7 rastet mit Nocken 41 in eine Nut 42 auf der Aussenseite 10a, 10b des Buchsenteils 1 ein.

Fig. 2 zeigt ausserdem eine Schutzklappe 8, welche auf einer Achse 9 drehbar gelagert ist. Die Schutzklappe 8 schliesst den Innenraum des Buchsenteils und die Öffnung 2 ab und vermeidet auf diese Weise Verschmutzungen.

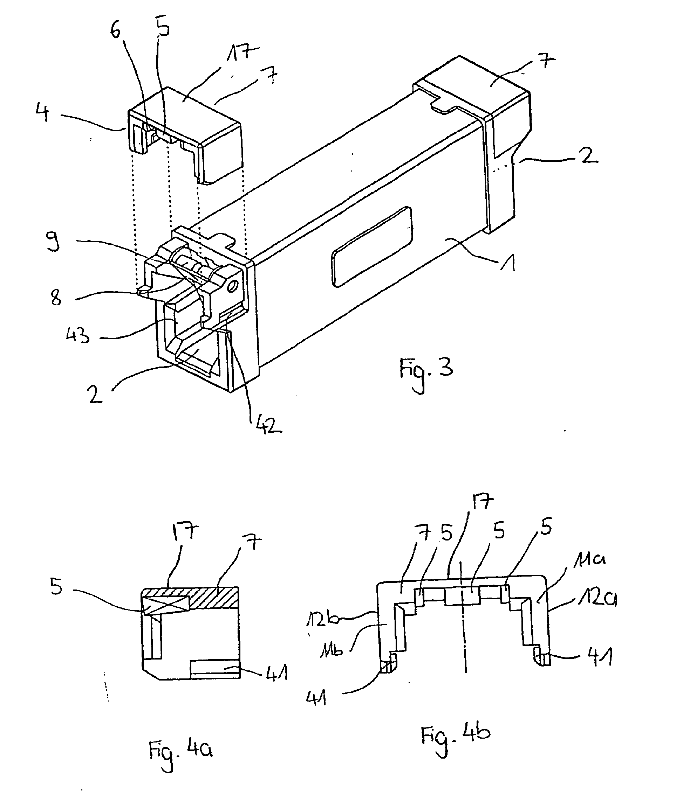

Fig. 3 zeigt das Buchsenteil 1 in vergrösserter Darstellung. Das Buchsenteil 1 weist auf zwei Seiten Öffnungen 2 auf, in welche ein Steckerteil eingeschoben werden kann. Das Buchsenteil ist mit Führungslinien 43 versehen, welche ein genau definiertes Einstecken des Steckerteils ermöglichen. Wie in Fig. 3 ersichtlich, ist der Sicherungsabschnitt 4 mit Vorsprüngen 5 und Aussparungen 6 versehen, welche mit den in Fig. 1 am Steckerteil 20 gezeigten Vorsprüngen 25 und Aussparungen 26 des Schlüsselabschnitts 23 in Eingriff bringbar sind.

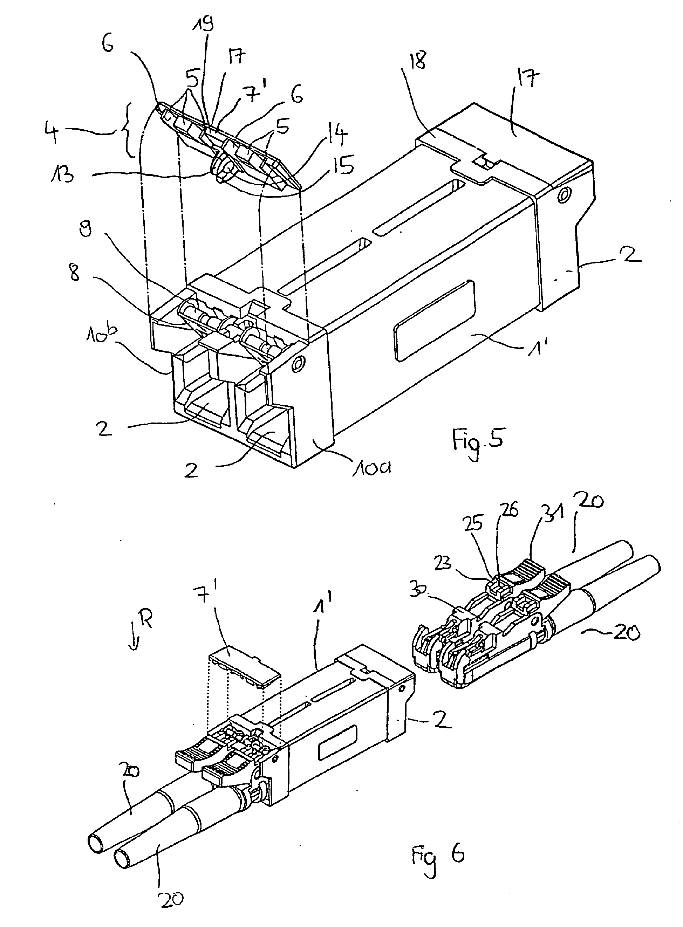

Fig. 4a zeigt einen Querschnitt durch das Kodierungselement 7 entlang der Einschiebachse A.

Fig. 4b zeigt eine Seitenansicht des Kodierungselements 7. Mit den auf ihrer unteren Seite leicht angeschrägten Nocken 41 schnappt das Kodierungselement 7 in die Nut 42 am Buchsenteil 1 ein.

Wenn das Steckerteil gemäss Fig. 1 mit einem Schlüsselabschnitt 23 mit einer bestimmten Kodierung in ein falsches Buchsenteil 1 eingesteckt werden soll, sind die Vorsprünge 5 und Aussparungen 6 des Kodierungselements 7 nicht in Eingriff mit den Aussparungen 26 und Vorsprüngen 25 des Sicherungsabschnittes 23 bringbar. Der Steckerteil 20 kann deshalb nicht korrekt einrasten.

Da das Kodierungselement 7 (wie in Fig. 1 gezeigt) in der Richtung R auf- und abgeschnappt werden kann, ist es auch möglich anschliessend das Entriegelungselement 31 vom Stekkerteil 20 zu entfernen und durch ein zweiten Entriegelungselement mit einer anderen Kodierung zu ersetzen. Anschliessend kann ein anderes Kodierungselement 7 auf das Steckerteil 1 aufgeschnappt werden.

Fig. 5 zeigt ein alternatives Ausführungsbeispiel eines Buchsenteils 1'. Das Buchsenteil 1' ist mit zwei Öffnungen 2 zur Aufnahme von zwei Steckerteilen 20 versehen. Das Buchsenteil 1' entspricht im wesentlichen dem Buchsenteil 1 und unterscheidet sich von diesem in der Anzahl der Öffnungen 2 und der Ausgestaltung des Kodierungselements. Das Kodierungselement 7' ist als flaches Plättchen ausgebildet. Das Kodierungselement 7' ist auf seiner Unterseite mit einem Vorsprung 13 versehen, der eine Öffnung 14 mit einer Hinterschneidung 15 aufweist. Mit dem Vorsprung 13 ist das plättchenartige Kodierungselement 7' auf die Achse 9 aufschnappbar, welche auch die Schutzklappe 8 trägt.

Im Ausführungsbeispiel gemäss Fig. 5 dient ein Teil der Vorsprünge 5 gleichzeitig als Hilfe zum Ausrichten und genauen Positionieren des Kodierungelementes 7' auf dem Buchsenteil 1'. Die mittlere Vertiefung am Kodierungselement 7' dient als Ausrichtelement 19, welches auf ein Gegenelement am Buchsenteil 1 passt. Das Ausrichtelement 19 weist auch zwei Vorsprünge 5 auf, welche einerseits eine laterale Positionierung des Kodierungselementes 7 erlauben und welches andererseits aber auch als Vorsprünge für die Kodierungen dienen.

In Fig. 6 ist das Buchsenteil 1' mit auf der einen Seite 2 eingesetzten Steckerteilen 20 und auf der anderen Seite nicht eingesetzten Steckerteilen 20 gezeigt.

Bei solchen Duplexanordnungen wäre die Anwendung des in Fig. 1 gezeigten U-förmigen Kodierungselementes aufgrund der grösseren Breite schwierig. Das flächige Plättchen 7' erlaubt ein einfaches Einsetzen von oben her in der Aufschnapprichtung R. Auch wenn mehrere solche Buchsenteile 1' nebeneinander dicht gepackt angeordnet sind, ist ein Aufsetzen des Kodierungselementes 7' ohne Probleme möglich.

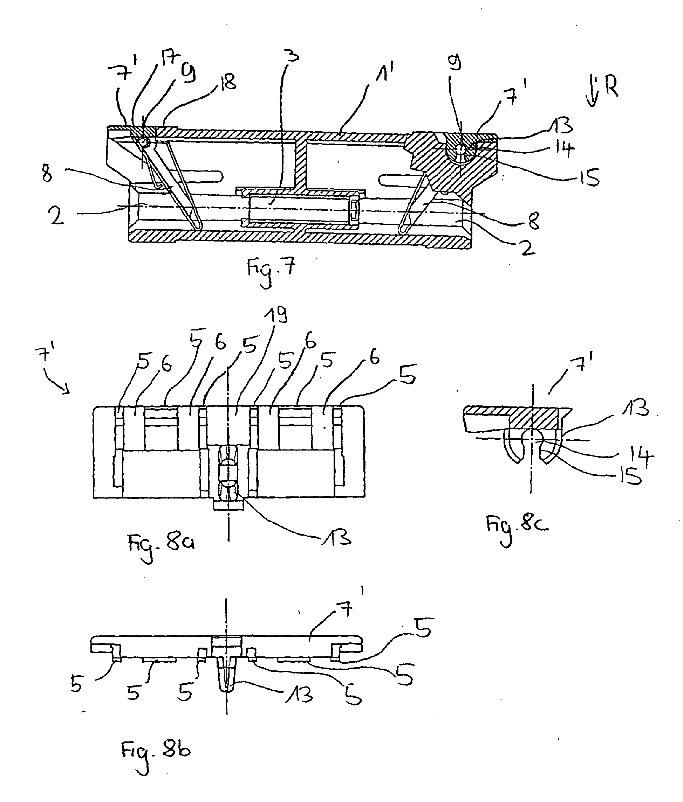

In Fig. 7 ist ein Längsschnitt durch ein Buchsenteil gemäss Fig. 5 gezeigt. Mit Ausnahme der Ausgestaltung des Kodierungselementes und des Sitzes für das Kodierungselement entspricht die Ansicht in Fig. 7 auch einem Längsschnitt durch das Buchsenteil gemäss Fig. 1 bis 3. Im Innern des Buchsenteils 1' ist eine Buchse 3 zur Aufnahme eines Steckkersstifts des Steckerteils 20 angeordnet. Das Steckerteil 20 ist von beiden Seiten her durch die Öffnungen 2 in das Buchsenteil 1' einsteckbar. Schutzklappen 8 schliessen das Innere des Buchsenteils 1' bei nicht eingesetztem Steckerteil staubdicht ab.

Fig. 7 zeigt, wie das Kodierungselement 7' mit dem Vorsprung 13 auf die Achse 9 aufschnappbar ist. Auch bei eingesetztem Steckerteil kann das Kodierungselement 7' problemlos in Aufschnapprichtung R entfernt werden.

Fig. 8a zeigt eine Untenansicht des Kodierungselementes 7'. Die beiden mittleren Vorsprünge 5 definieren und umschliessen ein Ausrichtelement 19, welches das genaue Positionieren des Kodierungselement 7' auf dem Buchsenteil 1' erlaubt.

Die Abfolge von Vorsprüngen 5 und Aussparungen 6, bzw. deren jeweilige Breite und Tiefe kodieren das Kodierungselement 7'.

In Fig 8b ist eine Vorderansicht des Kodierungselementes 7' gezeigt.

In Fig. 8c ist eine vergrösserte Darstellung des Vorsprungs 13 gezeigt, mittels welchem das Kodierungselement 7' auf die Achse 9 am Buchsenteil 1' aufschnappbar ist.

Sowohl das Buchsenteil als auch das Kodierungselement ist aus einem Kunststoffmaterial im Spritzgussverfahren hergestellt und weist deshalb zum Aufschnappen die notwendige Verformbarkeit auf. Das Kodierungselement kann mit einer unterschiedlichen Farbe eingefärbt werden.

## Patentansprüche

1. Buchsenteil (1, 1'), für eine Steckverbindung für Lichtwellenleiter,
mit wenigstens einer Öffnung (2) zur Aufnahme eines Steckerteils (20), welches entlang einer Einschiebachse (A) wenigstens teilweise in das Buchsenteil (1, 1') einschiebbar ist,
wobei das Buchsenteil (1, 1') mit einem Sicherungsabschnitt (4) mit einer aus Vorsprüngen (5) und/oder Aussparungen (6) bestehenden Kodierung versehen ist, in welche ein Schlüsselabschnitt (23) eines Steckerteils (20) mit einer entsprechenden Kodierung in Eingriff bringbar ist,
**dadurch gekennzeichnet, dass** der Sicherungsabschnitt (4) auf wengistens einem separat ausgebildeten Kodierungselement (7, 7') angeordnet ist, und dass das Kodierungselement (7, 7') in einer Aufschnapprichtung (R) etwa senkrecht zur Einschiebachse (A) auf das Buchsenteil (1) aufschnappbar ist, wobei
das Kodierungselement (7, 7') bei in das Buchsenteil (1) eingesetztem Steckerteil (20) auf das Buchsenteil (1) aufschnappbar ist.

2. Buchsenteil nach Anspruche 1, **dadurch gekennzeichnet, dass** das Buchsenteil (1, 1') mit wenigstens einer Schutzklappe (8) zum Verschliessen der Öffnung (2) versehen ist, welche schwenkbar auf einer Achse (9) im Buchsenteil (1, 1') gelagert ist.

3. Buchsenteil nach einer der Ansprüche 1 bis 2, mit zwei Seitenwänden (10a, 10b), **dadurch gekennzeichnet, dass** das Kodierungselement (7) etwa U-förmig ausgebildet ist, wobei das Kodierungselement (7) Schenkel (11a, 11b) aufweist, mit welchen es auf die Seitenwände (10a, 10b) aufschnappbar ist.

4. Buchsenteil nach Anspruch 3, **dadurch gekennzeichnet, dass** die Aussenfläche (12a, 12b) je eines der Schenkel (11a, 11b) je etwa in der selben Ebene wie die Seitenwände (10a, 10b) liegt.

5. Buchsenteil nach einem der Ansprüche 2 bis 4, **dadurch gekennzeichnet, dass** das Kodierungselement als Plättchen (7') ausgebildet ist,
welches mit wenigstens einem Schnappelement, vorzugsweise mit einem Vorsprung (13), der mit einer Aussparung (14) mit einer Hinterschneidung (15) versehen ist, auf die Achse (9) aufschnappbar ist.

6. Buchsenteil nach Anspruch 5, **dadurch gekennzeichnet, dass** das Buchsenteil als Duplexteil (1') mit zwei Buchsen (3) zur Aufnahme von zwei nebeneinanderliegenden Steckerstiften ausgebildet ist und zwei nebeneinanderliegende Schutzklappen (8) auf der Achse (9) aufweist, wobei das Schnappelement (13) in einem mittigen Abschnitt am Plättchen entlang (7') angeordnet ist und zwischen den Schutzklappen (8) auf die Achse (9) aufschnappbar ist.

7. Buchsenteil nach einem der Ansprüche 1 bis 6, **dadurch gekennzeichnet, dass** das Kodierungselement (7, 7') einseitig eine im wesentlichen flache Oberfläche (17) aufweist, die bei aufgeschnapptem Kodierungselement (7, 7') etwa in der selben Ebene liegt, wie die Oberseite (18) des Buchsenteils (1, 1').

8. Buchsenteil nach einem der Ansprüche 1 bis 7, **dadurch gekennzeichnet, dass** das Kodierungselement (7, 7') Ausrichtelemente (19) aufweist, die ein genau definiertes und positioniertes Aufschnappen des Kodierungselementes (7, 7') gewährleisten, wobei vorzugsweise wenigstens ein Teil der Ausrichtelemente (19) gleichzeitig als Vorsprung (5) für die Kodierung des Sicherungsabschnitts dient (4).

9. Buchsenteil nach einem der Ansprüche 1 bis 8, **dadurch gekennzeichnet dass** das Buchsenteil (1) einstückig, vorzugsweise im Spritzgussverfahren hergestellt ist und dass das Kodierungselement (7, 7') einstückig, vorzugsweise im Spritzgussverfahren hergestellt ist.

10. Steckverbindung für Lichtwellenleiter mit wenigstens einem Buchsenteil nach einem der Ansprüche 1 bis 9 und mit wenigstens einem Steckerteil (21), welches in das Buchsenteil (1) einschiebbar ist,
wobei das Steckerteil (21) einen Schlüsselabschnitt (23) mit einer Kodierung aus Aussparungen (26) und/oder Vorsprüngen (25) aufweist, der mit dem Sicherungsabschnitt (4) am Buchsenteil in Eingriff bringbar ist.

11. Steckverbindung nach Anspruch 10, **dadurch gekennzeichnet, dass** das Buchsenteil eine Sperrklinke und das Stekkerteil (21) ein Sperrelement (30) und ein Entriegelungselement (31) aufweist, wobei der Schlüsselabschnitt (23) am Entriegelungelement (31) angeordnet ist.

12. Steckverbindung nach Anspruch 11, **dadurch gekennzeichnet, dass** das Entriegelungselement (31) auswechselbar im Steckerteil (21) gehalten ist.

## Claims

1. Sleeve part (1, 1'), for a plug connection for optical waveguides, with at least one opening (2) for accommodating a plug part (20), which can be inserted at least partially into the sleeve part (1, 1') along an insertion axis (A), the sleeve part (1, 1') being provided with a securing portion (4) with a coding comprising projections (5) and/or reliefs (6), into which a key portion (23) of a plug part (20) with a corresponding coding can be brought into engagement, **characterized in that** the securing portion (4) is arranged on at least one separately formed coding element (7, 7'), and **in that** the coding element (7, 7') can be made to snap onto the sleeve part (1) in a snapping-on direction (R) approximately perpendicular to the insertion axis (A), the coding element (7, 7') allowing itself to be made to snap onto the sleeve part (1) when the plug part (20) is fitted in the sleeve part (1).

2. Sleeve part according to Claim 1, **characterized in that** the sleeve part (1, 1') is provided with at least one protective flap (8) for closing the opening (2), which is pivotably mounted on a spindle (9) in the sleeve part (1, 1').

3. Sleeve part according to either of Claims 1 and 2, with two side walls (10a, 10b), **characterized in that** the coding element (7) is formed in an approximately U-shaped manner, the coding element (7) having legs (11a, 11b), with which it can be made to snap onto the side walls (10a, 10b).

4. Sleeve part according to Claim 3, **characterized in that** the outer face (12a, 12b) of one of the legs (11a, 11b) respectively lies approximately in the same plane as the side walls (10a, 10b).

5. Sleeve part according to one of Claims 2 to 4, **characterized in that** the coding element is formed as a small plate (7'), which can be made to snap onto the spindle (9) by at least one snap element, preferably with a projection (13), which is provided with a relief (14) with an undercut (15).

6. Sleeve part according to Claim 5, **characterized in that** the sleeve part is formed as a duplex part (1') with two sleeves (3) for accommodating two plug pins lying next to each other and has two protective flaps (8) lying next to each other on the spindle (9), the snap element (13) being arranged in a central portion along the small plate (7') allowing itself to be made to snap onto the spindle (9) between the protective flaps (8).

7. Sleeve part according to one of Claims 1 to 6, **characterized in that** the coding element (7, 7') has on one side a substantially flat surface (17), which lies approximately in the same plane as the upper side (18) of the sleeve part (1, 1') when the coding element (7, 7') is snapped on.

8. Sleeve part according to one of Claims 1 to 7, **characterized in that** the coding element (7, 7') has aligning elements (19), which ensure precisely defined and positioned snapping-on of the coding element (7, 7'), at least some of the aligning elements (19) preferably serving at the same time as a projection (5) for the coding of the securing portion (4).

9. Sleeve part according to one of Claims 1 to 8, **characterized in that** the sleeve part (1) is produced in one piece, preferably by the injection-moulding process, and **in that** the coding element (7, 7') is produced in one piece, preferably by the injection-moulding process.

10. Plug connection for optical waveguides with at least one sleeve part according to one of Claims 1 to 9 and with at least one plug part (20), which can be inserted into the sleeve part (1), the plug part (20) having a key portion (23) with a coding comprising reliefs (26) and/or projections (25), which can be brought into engagement with the securing portion (4) on the sleeve part.

11. Plug connection according to Claim 10, **characterized in that** the sleeve part has a catch and the plug part (20) has a blocking element (30) and an unlocking element (31), the key portion (23) being arranged on the unlocking element (31).

12. Plug connection according to Claim 11, **characterized in that** the unlocking element (31) is exchangeably held in the plug part (20).

## Revendications

1. Elément formant alvéole (1, 1') pour un connecteur à fiches pour guides d'ondes optiques,
avec au moins une ouverture (2) pour recevoir un élément connecteur (20) qui est apte à être glissé au moins partiellement dans l'élément (1, 1') suivant un axe d'introduction (A),
l'élément formant alvéole (1, 1') étant pourvu d'une section de blocage (4) qui présente un codage composé de saillies (5) et/ou de creux (6) et dans laquelle est engagée une section à clé (23) d'un élément connecteur (20) présentant un codage correspondant,
**caractérisé en ce que** la section de blocage (4) est disposée sur au moins un élément de codage (7, 7') conçu séparément et **en ce que** l'élément de codage (7, 7') est apte à être verrouillé par ressort sur l'élément formant alvéole (1) dans un sens de verrouillage (R) à peu près perpendiculaire au sens d'introduction (A),
l'élément de codage (7, 7') pouvant être verrouillé par ressort sur l'élément formant alvéole (1) quand l'élément connecteur (20) est introduit dans celui-ci.

2. Elément formant alvéole (1, 1') selon la revendication 1,
**caractérisé en ce qu'**il est pourvu d'au moins un clapet de protection (8) qui est destiné à fermer l'ouverture (2) et qui est monté pour pouvoir pivoter sur un axe (9) dans l'élément formant alvéole (1, 1').

3. Elément formant alvéole selon la revendication 1 ou 2, avec deux parois latérales (10a, 10b), **caractérisé en ce que** l'élément de codage (7) a à peu près la forme d'un U, l'élément de codage (7) présentant des branches (11a, 11b) grâce auxquelles il peut être verrouillé par ressort sur les parois latérales (10a, 10b).

4. Elément formant alvéole selon la revendication 3, **caractérisé en ce que** la surface extérieure (12a, 12b) des branches (11a, 11b) se trouve dans le même plan que les parois latérales (10a, 10b).

5. Elément formant alvéole selon l'une des revendications 2 à 4, **caractérisé en ce que** l'élément de codage est conçu comme une plaquette (7') qui est apte à être verrouillée par ressort sur l'axe (9) grâce à au moins un élément formant ressort, de préférence une saillie (13) qui est pourvue d'un creux (14) avec une contre-dépouille (15).

6. Elément formant alvéole selon la revendication 5, **caractérisé en ce qu'**il est conçu comme un élément double (1') avec deux alvéoles (3) pour recevoir deux broches disposées côte à côte, et il présente deux clapets de protection juxtaposés (8) sur l'axe (9), l'élément à enclenchement (13) étant disposé dans une section centrale le long de la plaquette (7') et étant apte à être enclenché sur l'axe (9) entre les clapets de protection (8).

7. Elément formant alvéole selon l'une des revendications 1 à 6, **caractérisé en ce que** l'élément de codage (7, 7') présente unilatéralement une surface (17) sensiblement plate qui, quand l'élément de codage (7, 7') est enclenché, se trouve à peu près dans le même plan que le côté supérieur (18) de l'élément formant alvéole (1, 1').

8. Elément formant alvéole selon l'une des revendications 1 à 7, **caractérisé en ce que** l'élément de codage (7, 7') présente des éléments d'alignement (19) qui garantissent un enclenchement défini et positionné avec précision pour l'élément de codage (7, 7'), étant précisé que de préférence une partie au moins des éléments d'alignement (19) sert en même temps de saillie (5) pour le codage de la section de blocage (4).

9. Elément formant alvéole (1) selon l'une des revendications 1 à 8, **caractérisé en ce qu'**il est fabriqué d'une seule pièce, de préférence par moulage par injection, et **en ce que** l'élément de codage (7, 7') est fabriqué d'une seule pièce, de préférence par moulage par injection.

10. Connexion enfichable pour guides d'ondes optiques, avec au moins un élément formant alvéole selon l'une des revendications 1 à 9 et un élément connecteur (20) qui est apte à être inséré dans l'élément formant alvéole (1),
l'élément connecteur (20) comportant une section à clé (23) qui présente un codage composé de creux (26) et/ou de saillies (25) et qui est apte à être accouplée à la section de blocage (4) de l'élément formant alvéole.

11. Connexion enfichable selon la revendication 10, **caractérisée en ce que** l'élément formant alvéole présente un cran d'arrêt tandis que l'élément connecteur (20) présente un élément d'arrêt (30) et un élément de déverrouillage (31), la section à clé (23) étant disposée sur l'élément de déverrouillage (31).

12. Connexion enfichable selon la revendication 11, **caractérisée en ce que** l'élément de déverrouillage (31) est fixé dans l'élément connecteur (20) de manière à pouvoir être changé.
